# EUROPEAN PATENT SPECIFICATION

(11) **EP 2 498 479 B1**
(45) Date of publication and mention of the grant of the patent: **13.11.2013**
(21) Application number: 11157645.0
(22) Date of filing: 10.03.2011
(51) Int. Cl.: H04M 1/02, G06F 1/16, H05K 5/00

(54) **Locking device for case of portable electronic device**
Verriegelungsvorrichtung für Gehäuse einer tragbaren elektronischen Vorrichtung
Dispositif de verrouillage pour étui pour dispositif électronique portable

(43) Date of publication of application: 12.09.2012
(73) Proprietor: King Slide Works Co., Ltd., Kaohsiung Hsien (TW)
(72) Inventor: Chen, Jung-Pin, Ho-Hsiang Village (TW); Lin, Shu-Chen, Ho-Hsiang Village (TW); Chen, Shan-Yao, Ho-Hsiang Village (TW)
(74) Representative: Viering, Jentschura & Partner

(56) References cited:
- EP-A2- 2 262 204
- US-A1- 2004 045 961
- US-A1- 2004 053 649

## Description

### FIELD OF THE INVENTION

The present invention relates to a locking device, and more particularly, to a locking device for a replaceable case of a portable electronic device.

### BACKGROUND OF THE INVENTION

The cellular phones, PDAs, GPSs, and electronic reading devices become necessary equipment for almost every person and the aesthetic outer appearance attracts the user's attentions directly by its color, texture and patterns. The outer appearance shows the personality of the user. However, the users cannot change the outer appearance of the electronic devices easily because the shape, the colors and the patterns are integral to the casing. Therefore, replaceable cases are developed to allow the users to change the casings as desired.

The applicant has filed a EP Application No. 10165246.9 with the title of "housing assembly for electronic device" which is ready for examination.

The conventional case of the electronic lacks of locking feature to prevent the user from being operated improperly, or to prevent the case from being separated from the electronic device by impact such as dropping on the ground. Therefore, the present invention provides a locking device for securing the case to the electronic device.

The present invention intends to provide a locking device to securely connect the case to the electronic device.

### SUMMARY OF THE INVENTION

The present invention relates to a securing device for a portable electronic device and comprises a body, a case, an engaging unit and a locking unit. The body has a first side and a second side which is located corresponding to the first side. The case is mounted to the body. The engaging unit has a first engaging member and a second engaging member, and the locking unit has a first locking member, a second locking member, a connection member and a control member. The first engaging member is connected to the first side of the body and the second engaging member is connected to the second side of the body. The first locking member is movably connected to the first side of the body and movable from a first initial position to a first unlocking position relative to the first engaging member. The first locking member has a first stop and a first recess, wherein the first stop is located corresponding to the first engaging member so that the first engaging member is stopped by the first stop when the first locking member is located at the first initial position. The second locking member is movably connected to the second side of the body and movable from a second initial position to a second unlocking position relative to the second engaging member. The second locking member has a second stop and a second recess, wherein the second stop is located corresponding to the second engaging member so that the second engaging member is stopped by the second stop when the second locking member is located at the second initial position. The connection member has a first end, a second end located corresponding to the first end, and a connection portion connected between the first and second ends. The first end and the second end are respectively pivotably connected to the first locking member and the second locking member. The control member is connected to the connection portion of the connection member. The control member is movable from a third initial position to a third unlocking position. The first engaging member is located corresponding to the first stop when the control member is located at the third initial position and the first locking member is located at the first initial position. The second engaging member is located corresponding to the second stop when the second locking member is located at the second initial position. The connection member is moved by the control member when the control member is moved to the third unlocking position, and the first recess of the first locking member is moved from the first initial position to the first unlocking position and located corresponding to the first engaging member. The second recess of the second locking member is moved from the second initial position to the second unlocking position and located corresponding to the second engaging member.

The control member has a shaft portion and a guide slot. The body is pivotably connected to the shaft portion and the guide slot is located corresponding to the connection portion of the connection member. The connection portion has a pin engaged with the guide slot.

Preferably, the connection portion of the connection member has at least one slide member and the body has a slot which is located corresponding to the at least one slide member. The connection member moves linearly by moving the at least one slide member within the slot.

Preferably, the guide slot is shaped as an involute with a center at the shaft portion.

Preferably, the control member includes a stop member and the body has a restriction slot located corresponding to the stop member. The restriction slot is an annular slot with a center at the shaft portion.

Preferably, the body has a first part and a second part. The first part and the second part are matched to each other to accommodate the engaging unit and the locking unit therein. The engaging unit and the locking unit are composed of the first engaging member, the second engaging member, the first locking member, the second locking member, the connection member and the control member.

Preferably, an operation unit is connected to the body and includes an operation member, a first release member connected to the operation member, a second release member and a link. The link is pivotably connected to the body at a mediate portion thereof and two ends of the link are connected to the first and second release members. The first release member drives the first engaging member and the second release member drives the second engaging member. The operation member is pivotably connected to the body and has an arm which is connected to an end of the first release member where the link is connected to the end.

Preferably, the operation member has a pivot to which the body is pivotably connected and the arm has a connection hole. The first release member has a protrusion which extends through the connection hole.

The primary object of the present invention is to provide a securing device which ensures that the case is secured to the body of the electronic device.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the body and the case of the securing device of the present invention;
Fig. 2 is another exploded view to show the securing device of the present invention;
Fig. 3 is an exploded view to show the body and the connection member of the securing device of the present invention;
Fig. 4 shows the locked status of the securing device of the present invention;
Fig. 5 shows the operation unit of the securing device of the present invention;
Fig. 6 shows that the engaging unit is locked by the locking unit;
Fig. 7 shows that the locking unit is unlocked, and
Fig. 8 shows that the locking unit is unlocked and the engaging unit is moved by operation of the control member.

### DETAILED DESCRIPTION OF THE PREFERRED EMBODIMENT

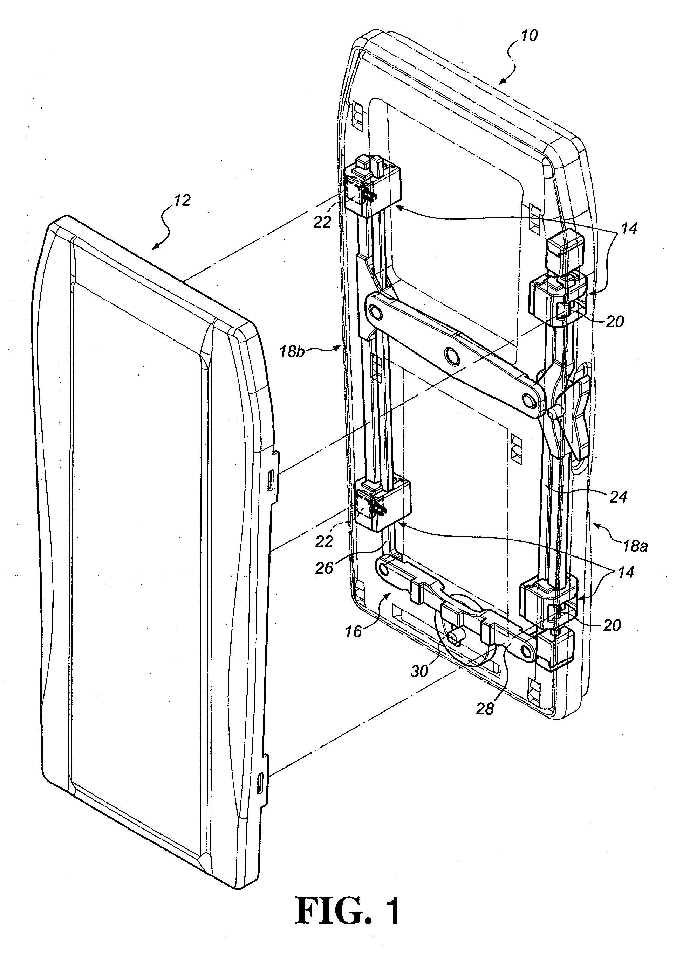

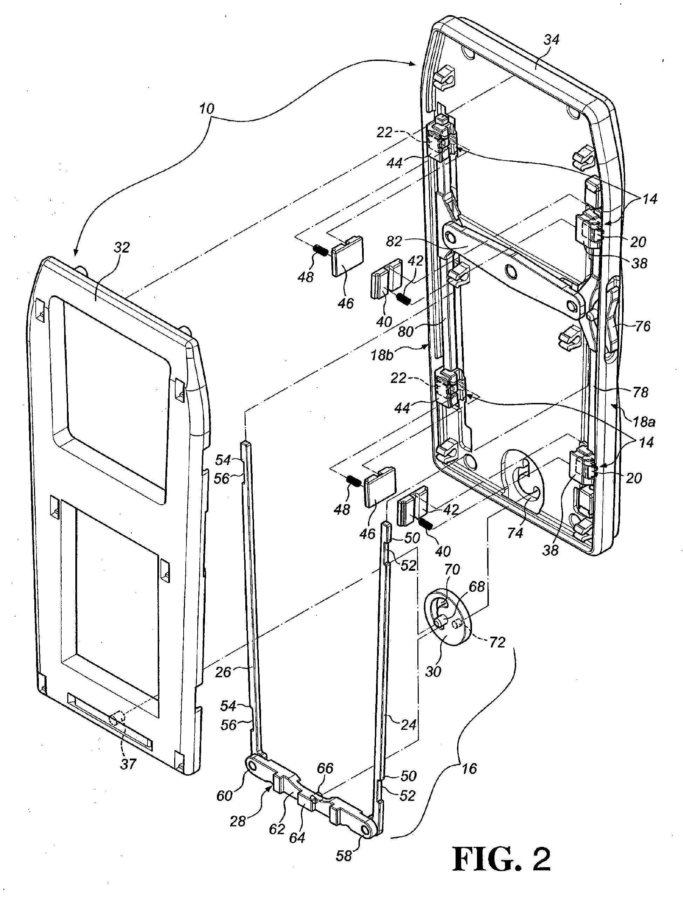

Referring to Fig. 1, the securing device of the present invention comprises a body 10, a case 12, an engaging unit 14 and a locking unit 16. The body 10 includes a first side 18a and a second side 18b which is located corresponding to the first side 18a. The case 12 is mounted to the body 10. The engaging unit 14 includes a first engaging member 20 and a second engaging member 22, and the locking unit 16 includes a first locking member 24, a second locking member 26, a connection member 28 and a control member 30 as shown in Fig. 2.

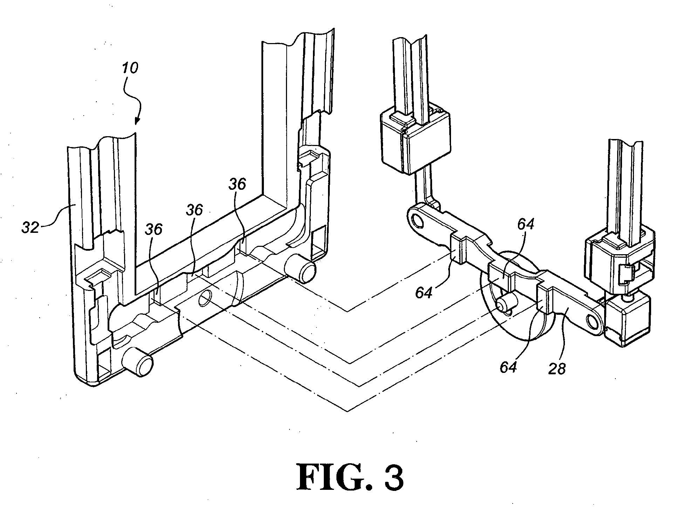

The body 10 includes a first part 32 and a second part 34, wherein the first part 32 and the second part 34 are matched to each other to accommodate the engaging unit 14 and the locking unit 16 therein. The engaging unit 14 and the locking unit 16 are composed of the first engaging member 20, the second engaging member 22, the first locking member 24, the second locking member 26, the connection member 28 and the control member 30. The body 10 further has a slot 36 and a pivot hole 37, the slot 36 is located corresponding to the connection member 28 and the control member 30 is pivotably connected to the pivot hole 37. The slot 36 can be defined in the first part 32 and can be plural as shown in Fig. 3.

The first engaging member 20 is received in a space defined by a first fixing part 38 and a first fixing member 40. The first engaging member 20 is connected to the first side 18a of the body 10 and biased by a first resilient member 42 to contact between the first engaging member 20 and the first fixing member 40. By the arrangement, the first engaging member 20 is applied a force to one side of the case 12. The number of the combination of the first engaging member 20, the first fixing part 38, the first fixing member 40 and the first resilient member 42 can be plural.

The second engaging member 22 is received in a space defined by a second fixing part 44 and a second fixing member 46. The second engaging member 22 is connected to the second side 18b of the body 10 and biased by a second resilient member 48 to contact between the second engaging member 22 and the second fixing member 46. By the arrangement, the second engaging member 22 is applied a force to the other side of the case 12. The number of the combination of the second engaging member 22, the second fixing part 44, the second fixing member 46 and the second resilient member 48 can be plural.

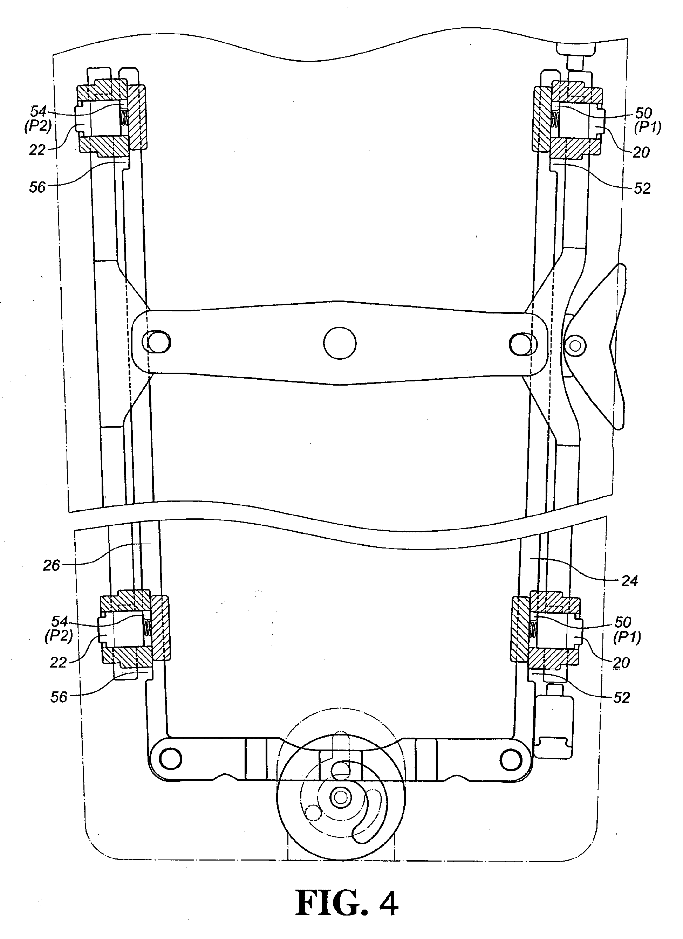

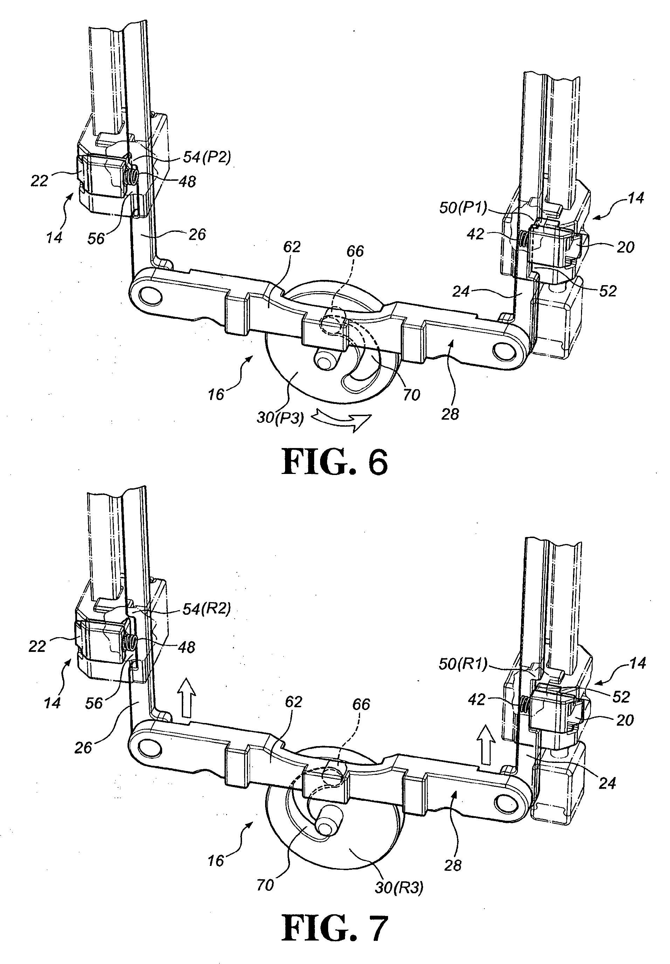

The first locking member 24 is movably connected to the first side 18a of the body 10 and movable longitudinally from a first initial position P1 to a first unlocking position R1 (Figs. 6 and 7) relative to the first engaging member 20. The first locking member 24 includes a first stop 50 and a first recess 52. As shown in Fig. 4, the first stop 50 is located corresponding to the first engaging member 20 so that the first engaging member 20 is stopped by the first stop 50 when the first locking member 24 is located at the first initial position P1. The number of the first stop 50 and the first recess 52 can be plural.

The second locking member 26 is movably connected to the second side 18b of the body 10 and movable longitudinally from a second initial position P2 to a second unlocking position R2 relative to the second engaging member 22 as shown in Figs. 6 and 7. The second locking member 26 includes a second stop 54 and a second recess 56. As shown in Fig. 4, the second stop 54 is located corresponding to the second engaging member 22 so that the second engaging member 22 is stopped by the second stop 54 when the second locking member 26 is located at the second initial position P2. The number of the second stop 54 and the second recess 56 can be plural.

The connection member 28 includes a first end 58, a second end 60 located corresponding to the first end 58, and a connection portion 62 connected between the first and second ends 58, 60. The first end 58 and the second end 60 are respectively pivotably connected to the first locking member 24 and the second locking member 26. The connection portion 62 of the connection member 28 has at least one slide member 64 and the body 10 has a slot 36 (Fig. 3) which is located corresponding to the at least one slide member 64. The connection member 28 moves linearly by moving the at least one slide member 64 within the slot 36. The connection portion 62 has a pin 66.

The control member 30 is connected to the connection portion 62 of the connection member 28. As shown in Figs. 6 and 7, the control member 30 is movable from a third initial position P3 to a third unlocking position R3. The first engaging member 20 is located corresponding to the first stop 50 when the control member 30 is located at the third initial position P3 and the first locking member 24 is located at the first initial position P1. The second engaging member 22 is located corresponding to the second stop 54 when the second locking member 26 is located at the second initial position P2. The control member 30 has a shaft portion 68 and a guide slot 70. The body 10 is pivotably connected to the shaft portion 68 by its pivot hole 37 and the guide slot 70 is located corresponding to the connection portion 62 of the connection member 28. The connection portion 62 has the pin 66 engaged with the guide slot 70. The guide slot 70 is shaped as an involute with a center at the shaft portion 68. Preferably, the control member 30 includes a stop member 72 and the body 10 has a restriction slot 74 located corresponding to the stop member 72. The restriction slot 74 is an annular slot with a center at the shaft portion 68. The restriction slot 74 can be defined in the second part 34 to restrict the angle of the rotation of the control member 30.

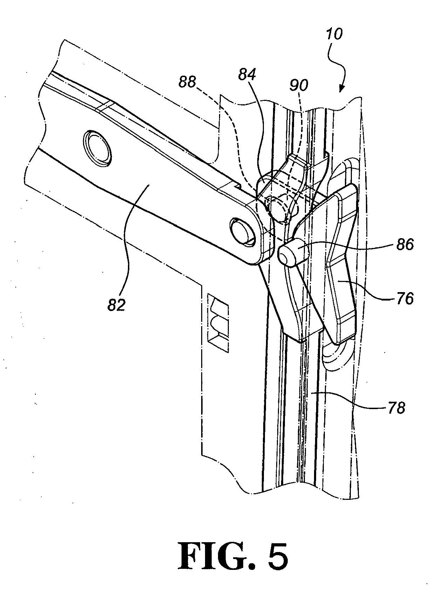

As shown in Fig. 2, the mechanism that allows the first and second engaging members 20, 22 to be movable is disclosed in EP Patent Application No. 10165246.9 and will not be described in detail. An operation unit is connected to the body 10 and includes an operation member 76, a first release member 78 connected to the operation member 76, a second release member 80 and a link 82 which is pivotably connected to the body 10 at a mediate portion thereof and two ends of the link 82 are connected to the first and second release members 78, 80. As shown in Fig. 5, the operation member 76 is pivotably connected to the body 10 and has an arm 84 which is connected to an end of the first release member 78 where the link 82 is connected to the end. Preferably, the operation member 76 includes a pivot 86 to which the body 10 is pivotably connected. The arm 84 has a connection hole 88 and the first release member 78 has a protrusion 90 which extends through the connection hole 88. By this arrangement, the operation member 76 is operated as a lever and the arm 84 drives the first release member 78 and the link 82.

As shown in Figs. 6 and 7, when the control member 30 is rotated, the pin 66 of the connection member 28 is engaged with the guide slot 70 of the control member 30, so that when the control member 30 is moved to the third unlocking position R3, the connection member 28 is driven linearly by the control member 30, and the connection member 28 drives the first locking member 24 to disengage the first stop 50 of the first locking member 24 away from the first engaging member 20. The first recess 52 of the first locking member 24 is moved from the first initial position P1 to the first unlocking position R1 and located corresponding to the first engaging member 20. The first engaging member 20 is movable within the first recess 52. In the meanwhile, the second locking member 26 is moved by the connection member 28, and second stop 54 of the second locking member 26 is disengaged from the second engaging member 22. The second recess 56 of the second locking member 26 is moved from the second initial position P2 to the second unlocking position R2 and located corresponding to the second engaging member 22. The second engaging member 22 is movable in the second recess 56. Therefore, the first and second engaging members 20, 22 unlock the first and second locking members 24, 26. Only the resilient forces from the first and second resilient members 42, 48 are available.

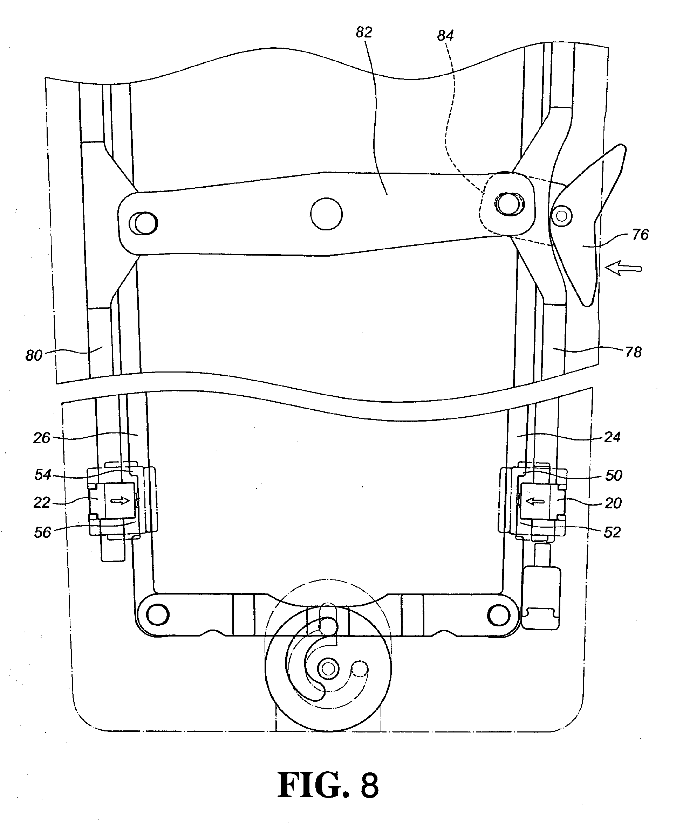

As shown in Fig. 8, when the operation member 76 is operated as a lever, the arm 84 drives both of the first release member 78 and the link 82, and the second release member 80 is driven by the link 82. Therefore, when the operation member is at the unlocked status as shown in Figs. 7 and 8, the first engaging member 20 is moved by the first release member 78 and moves to the first recess 52 of the first locking member 24. The second engaging member 22 is moved by the second release member 80 and moves to the second recess 56 of the second locking member 26. Accordingly, the first and second engaging members 20, 22 release the body 10 from the case 12 and the case 12 can be removed from the body 10.

Before the securing device is unlocked, the first engaging member 20 is stopped by the first stop 50 of the first locking member 24 and secured to one side of the case 12, and the second engaging member 22 is stopped by the second stop 54 of the second locking member 26 and secured to the other side of the case 12. This ensures that the case 12 is securely connected to the body 10.

While we have shown and described the embodiment in accordance with the present invention, it should be clear to those skilled in the art that further embodiments may be made without departing from the scope of the present invention.

## Claims

1. A securing device comprising:
a body (10), a case (12), an engaging unit (14) and a locking unit (16), the body (10) having a first side (18a) and a second side (18b) which is located corresponding to the first side (18a), the case (12) mounted to the body (10), the engaging unit (14) having a first engaging member (20) and a second engaging member (22), the locking unit (16) having a first locking member (24), a second locking member (26), a connection member (28) and a control member (30);
the first engaging member (20) connected to the first side (18a) of the body (10) and the second engaging member (22) connected to the second side (18b) of the body (10);
the first locking member (24) movably connected to the first side (18a) of the body (10) and movable from a first initial position (P1) to a first unlocking position (R1) relative to the first engaging member (20), the first locking member (24) having a first stop (50) and a first recess (52), the first stop (50) located corresponding to the first engaging member (20) so that the first engaging member (20) is stopped by the first stop (50) when the first locking member (24) is located at the first initial position (P1);
the second locking member (26) movably connected to the second side (18b) of the body (10) and movable from a second initial position (P2) to a second unlocking position (R2) relative to the second engaging member (22), the second locking member (26) having a second stop (54) and a second recess (56), the second stop (54) located corresponding to the second engaging member (22) so that the second engaging member (22) is stopped by the second stop (54) when the second locking member (26) is located at the second initial position (P2);
the connection member (28) having a first end (58), a second end (60) located corresponding to the first end (58), and a connection portion (62) connected between the first and second ends (58, 60), the first end (58) and the second end (60) respectively pivotably connected to the first locking member (24) and the second locking member (26), and
the control member (30) connected to the connection portion (62) of the connection member (28), the control member (30) movable from a third initial position (P3) to a third unlocking position (R3), when the control member (30) is located at the third initial position (P3) the first engaging member (20) is located corresponding to the first stop (50), the first locking member (24) is located at the first initial position (P1), and the second engaging member (22) located corresponding to the second stop (54) when the second locking member (26) is located at the second initial position (P2), when the control member (30) is moved to the third unlocking position (R3) the connection member (28) is moved by the control member (30), the first recess (52) of the first locking member (24) is moved from the first initial position (P1) to the first unlocking position (R1) and located corresponding to the first engaging member (20), and the second recess (56) of the second locking member (26) is moved from the second initial position (P2) to the second unlocking position (R2) and located corresponding to the second engaging member (22), **characterized in that** the control member (30) has a shaft portion (68) and a guide slot (70), the body (10) is pivotably connected to the shaft portion (68), the guide slot (70) is located corresponding to the connection portion (62) of the connection member (28) and the connection portion (62) has a pin (66) engaged with the guide slot (70).

2. The securing device as claimed in claim 1, wherein the connection portion (62) of the connection member (28) has at least one slide member (64) and the body (10) has a slot (36) which is located corresponding to the at least one slide member (64), the connection member (28) moves linearly by moving the at least one slide member (64) within the slot (36).

3. The securing device as claimed in claim 1, wherein the guide slot (70) is shaped as an involute with a center at the shaft portion (68).

4. The securing device as claimed in claim 1, wherein the control member (30) includes a stop member (72) and the body (10) has a restriction slot (74) located corresponding to the stop member (72), the restriction slot (74) is an annular slot with a center at the shaft portion (68).

5. The securing device as claimed in claim 1, wherein the body (10) has a first part (32) and a second part (34), the first part (32) and the second part (34) are matched to each other to accommodate the engaging unit (14) and the locking unit (16) therein, the engaging unit (14) and the locking unit (16) are composed of the first engaging member (20), the second engaging member (22), the first locking member (24), the second locking member (26), the connection member (28) and the control member (30).

6. The securing device as claimed in claim 1, further comprising an operation unit connected to the body (10), wherein the operation unit includes an operation member (76), a first release member (78) connected to the operation member (76), a second release member (80) and a link (82), the link (82) is pivotably connected to the body (10) at a mediate portion thereof and two ends of the link (82) are connected to the first and second release members (78, 80), the first release member (78) drives the first engaging member (20) and the second release member (80) drives the second engaging member (22), the operation member (76) is pivotably connected to the body (10) and has an arm (84) which is connected to an end of the first release member (78) where the link (82) is connected to the end.

7. The securing device as claimed in claim 6, wherein the operation member (76) has a pivot (86) to which the body (10) is pivotably connected and the arm (84) has a connection hole (88), the first release member (78) has a protrusion (90) which extends through the connection hole (88).

## Patentansprüche

1. Ein Sicherungsmechanismus, umfassend:
einem Körper (10), einem Gehäuse (12), einem Einrückmechanismus (14) und aus einem Sperrmechanismus (16), wobei der Körper (10) eine erste Seite (18a) und eine zweite Seite (18b) in Übereinstimmung mit der ersten Seiten (18a) aufweist; das Gehäuse (12) am Körper (10) montiert ist; der Einrückmechanismus (14) mit einem ersten Einrückglied (20) und einem zweiten Einrückglied (22) versehen ist; der Sperrmechanismus (16) ein erstes Sperrglied (24), ein zweites Sperrglied (26), ein Verbindungsglied (28) und ein Betätigungsglied (30) umfaßt;
das erste Einrückglied (20) an der ersten Seite (18a) des Körpers (10) und das zweite Einrückglied (22) an der zweiten Seite (18b) des Körpers (10) befestigt sind;
das erste Sperrglied (24) beweglich an der ersten Seite (18a) des Körpers (10) befestigt ist und von einer ersten Ausgangsposition (P1) in eine erste Entsperrposition (R1) des ersten Einrückgliedes (20) verschoben werden kann; das erste Sperrglied (24) einen ersten Anschlag (50) und eine erste Aussparung (52) aufweist; der erste Anschlag (50) entsprechend dem ersten Einrückglied (20) angeordnet ist, wenn das erste Einrückglied (20) an den ersten Anschlag (50) anschlägt und sich das erste Sperrglied (24) in der ersten Ausgangsposition (P1) befindet;
das zweite Sperrglied (26) beweglich an der zweiten Seite (18b) des Körpers (10) befestigt ist und von einer zweiten Ausgangsposition (P2) in eine zweite Entsperrposition (R2) des zweiten Einrückgliedes (22) verschoben werden kann; das zweite Sperrglied (26) einen zweiten Anschlag (54) und eine zweite Aussparung (56) aufweist; der zweite Anschlag (54) entsprechend dem zweiten Einrückglied (22) angeordnet ist, wenn das zweite Einrückglied (22) an den zweiten Anschlag (54) anschlägt und sich das zweite Sperrglied (26) in der zweiten Ausgangsposition (P2) befindet;
das Verbindungsglied (28) ein erstes Endteil (58) und ein diesem ersten Endteil (58) entsprechendes zweites Endteil (60) aufweist, während ein Verbindungsteil (62) zwischen dem ersten und zweiten Endteil (58, 60) befestigt ist; das erste Endteil (58) und das zweite Endteil (60) drehgelenkig am ersten Sperrglied (24) bzw. am zweiten Sperrglied (26) befestigt sind, und
das Betätigungsglied (30) am Verbindungsteil (62) des Verbindungsgliedes (28) befestigt ist; das Betätigungsglied (30) von einer dritten Ausgangsposition (P3) in eine dritte Entsperrposition (R3) verschoben werden kann, wenn sich das Betätigungsglied (30) in der dritten Ausgangsposition (P3) befindet; das erste Einrückglied (20) entsprechend dem ersten Anschlag (50) angeordnet ist; das erste Sperrglied (24) sich in der ersten Ausgangsposition (p1) befindet und das zweite Einrückglied (22) entsprechend dem zweiten Anschlag (54) angeordnet ist, wenn sich das zweite Sperrglied (26) in der zweiten Ausgangsposition (P2) befindet; beim Verschieben des Betätigungsgliedes (30) in die dritte Entsperrposition (R3) das Verbindungsglied (28) mit dem Betätigungsglied (30) verschoben wird; die erste Aussparung (52) des ersten Sperrgliedes (24) von der ersten Ausgangsposition (P1) in die erste Entsperrposition (R1) verschoben und entsprechend dem ersten Einrückglied (20) angeordnet wird, während die zweite Aussparung (56) des zweiten Sperrgliedes (26) von der zweiten Ausgangsposition (P2) in die zweite Entsperrposition (R2) verschoben und entsprechend dem zweiten Einrückglied (22) angeordnet wird; **dadurch gekennzeichnet, dass** das Betätigungsglied (30) mit einem Zapfenteil (68) und einem Führungsschlitz (70) gebildet ist; der Körper (10) drehgelenkig am Zapfenteil (68) befestigt ist; der Führungsschlitz (70) sich an einer Stelle entsprechend dem Verbindungsteil (62) des Verbindungsgliedes (28) befindet und das Verbindungsgteil (62) einen Stift (66) aufweist, der in den Führungsschlitz (70) eingerückt ist.

2. Der Sicherungsmechanismus nach Anspruch 1, wobei das Verbindungsteil (62) des Verbindungsgliedes (28) mindestens ein gleitbares Glied (64) aufweist, während der Körper (10) mit einer Kerbe (36) versehen ist, die nach dem mindestens einen gleitbaren Glied (64) ausgerichtet ist; das Verbindungsglied (28) durch Bewegen des mindestens einen gleitbaren Gliedes (28) innerhalb der Kerbe (36) linear verschoben wird.

3. Der Sicherungsmechanismus nach Anspruch 1, wobei der Führungsschlitz (70) als eine Involute mit einem Mittelpunkt am Zapfenteil (68) geformt ist.

4. Der Sicherungsmechanismus nach Anspruch 1, wobei das Betätigungsglied (30) ein Anschlagteil (72) aufweist, während der Körper (10) eine Eingrenzrille (74) aufweist, die entsprechend dem Anschlagteil (72) gebildet ist; die Eingrenzrille (74) als einen kreisrunden Schlitz mit einem Mittelpunkt am Zapfentil (68) gebildet ist.

5. Der Sicherungsmechanismus nach Anspruch 1, wobei der Körper (10) ein erstes Teil (32) und ein zweites Teil (34) aufweist; das erste Teil (32) und das zweite Teil (34) aufeinander abgestimmt sind, um den Einrückmechanismus (14) und den Sperrmechanismus (16) aufzunehmen; der Einrückmechanismus (14) und der Sperrmechanismus (16) aus dem ersten Einrückglied (20), dem zweiten Einrückglied (22), dem ersten Sperrglied (24), dem zweiten Sperrglied (26), dem Verbindungsglied (28) und aus dem Betätigungsglied (30) bestehen.

6. Der Sicherungsmechanismus nach Anspruch 1, weiter umfassend einer Betätigungseinheit, die am Körper (10) befestigt ist, wobei die Betätigungseinheit aus einem Betätigungsglied (76) besteht; ein erstes Ausrückteil (78) am Betätigungsglied (76), einem zweiten Ausrückteil (80) und an einem Verbindungselement (82) befestigt ist; das Verbindungselement (82) drehgelenkig an einem mittleren Teil des Körpers (10) befestigt ist und beide Enden des Verbindungselements (82) am ersten und zweiten Ausrückglied (78, 70) befestigt ist; das erste Einrückglied (20) mit dem ersten Ausrückteil (78) und das zweite Einrückglied (22) mit dem zweiten Ausrückglied (80) angetrieben werden; das Betätigungsglied (76) drehgelenkig am Körper (10) befestigt und mit einem Arm (84) gebildet ist, der an einem Ende des ersten Ausrückteils (78) an der Stelle befestigt ist, wo das Verbindungselement (82) am Ende befestigt ist.

7. Der Sicherungsmechanismus nach Anspruch 6, wobei das Betätigungsglied (76) einen Drehzapfen (86) aufweist, an dem der Körper (10) drehgelenkig befestigt ist, und der Arm (84) mit einem Verbindungsloch (88) versehen ist; das erste Ausrückteil (78) mit einem Vorsprung (90) gebildet ist, der durch das Verbindungsloch (88) ragt.

## Revendications

1. Un dispositif de fixation comprenant :
un corps (10), un boîtier (12), une unité d'engagement (14) et une unité de verrouillage (16), le corps (10) ayant un premier côté (18a) et un deuxième côté (18b) qui est situé en correspondance avec le premier côté (18a), le boîtier (12) monté sur le corps (10), l'unité d'engagement (14) ayant un premier élément d'engagement (20) et un deuxième élément d'engagement (22), l'unité de verrouillage (16) ayant un premier élément de verrouillage (24), un deuxième élément de verrouillage (26), un élément de raccordement (28) et un élément de contrôle (30) ;
le premier élément d'engagement (20) raccordé au premier côté (18a) du corps (10) et le deuxième élément d'engagement (22) raccordé au deuxième côté (18b) du corps (10) ;
le premier élément de verrouillage (24) raccordé de façon mobile au premier côté (18a) du corps (10) et déplaçable à partir d'une première position initiale (P1) vers une première position de déverrouillage (R1) par rapport au premier élément d'engagement (20), le premier élément de verrouillage (24) ayant une première butée (50) et un premier évidement (52), la première butée (50) située en correspondance avec le premier élément d'engagement (20) de sorte que le premier élément d'engagement (20) est arrêté par la première butée (50) quand le premier élément de verrouillage (24) est situé à la première position initiale (P1) ;
le deuxième élément de verrouillage (26) raccordé de façon mobile au deuxième côté (18b) du corps (10) et déplaçable à partir d'une deuxième position initiale (P2) vers une deuxième position de déverrouillage (R2) par rapport au deuxième élément d'engagement (22), le deuxième élément de verrouillage (26) ayant une deuxième butée (54) et un deuxième évidement (56), la deuxième butée (54) située en correspondance avec le deuxième élément d'engagement (22) de sorte que le deuxième élément d'engagement (22) est arrêté par la deuxième butée (54) quand le deuxième élément de verrouillage (26) est situé à la deuxième position initiale (P2) ;
l'élément de raccordement (28) ayant une première extrémité (58), une deuxième extrémité (60) située en correspondance avec la première extrémité (58), et une partie de raccordement (62) raccordée entre les première et deuxième extrémités (58, 60), la première extrémité (58) et la deuxième extrémité (60) respectivement raccordées de façon pivotante au premier élément de verrouillage (24) et le deuxième élément de verrouillage (26), et
l'élément de contrôle (30) raccordé à la partie de raccordement (62) de l'élément de raccordement (28), l'élément de contrôle (30) déplaçable à partir d'une troisième position initiale (P3) vers une troisième position de déverrouillage (R3), quand l'élément de contrôle (30) est situé à la troisième position initiale (P3), le premier élément d'engagement (20) est situé en correspondance avec la première butée (50), le premier élément de verrouillage (24) est situé à la première position initiale (P1), et le deuxième élément d'engagement (22) situé en correspondance avec la deuxième butée (54) quand le deuxième élément de verrouillage (26) est situé à la deuxième initial position (P2), quand l'élément de contrôle (30) est déplacé vers la troisième position de déverrouillage (R3), l'élément de raccordement (28) est déplacé par l'élément de contrôle (30), le premier évidement (52) du premier élément de verrouillage (24) est déplacé de la première position initiale (P1) vers la première position de déverrouillage (R1) et situé en correspondance avec le premier élément d'engagement (20), et le deuxième évidement (56) du deuxième élément de verrouillage (26) est déplacé de la deuxième position initiale (P2) vers la deuxième position de déverrouillage (R2) et situé en correspondance avec le deuxième élément d'engagement (22), **caractérisé en ce que** l'élément de contrôle (30) a une partie d'axe (68) et une fente de guidage (70), le corps (10) est raccordé de façon pivotante à la partie d'axe (68), la fente de guidage (70) est située en correspondance avec la partie de raccordement (62) de l'élément de raccordement (28) et la partie de raccordement (62) a une broche (66) engagée dans la fente de guidage (70).

2. Le dispositif de fixation tel que revendiqué dans la revendication 1, où la partie de raccordement (62) de l'élément de raccordement (28) a au moins un élément de glissement (64) et le corps (10) a une fente (36) qui est située en correspondance avec au moins un élément de glissement (64), l'élément de raccordement (28) se déplace de façon linéaire en déplaçant au moins un élément de glissement (64) dans la fente (36).

3. Le dispositif de fixation tel que revendiqué dans la revendication 1, où la fente de guidage (70) a une forme profilée avec un centre à la partie d'axe (68).

4. Le dispositif de fixation tel que revendiqué dans la revendication 1, où l'élément de contrôle (30) inclut un élément butoir (72) et le corps (10) a une fente de restriction (74) située en correspondance avec l'élément butoir (72), la fente de restriction (74) est une fente annulaire avec un centre à la partie d'axe (68).

5. Le dispositif de fixation tel que revendiqué dans la revendication 1, où le corps (10) a une première partie (32) et une deuxième partie (34), la première partie (32) et la deuxième partie (34) correspondent l'une à l'autre pour pouvoir y accueillir l'unité d'engagement (14) et l'unité de verrouillage (16), l'unité d'engagement (14) et l'unité de verrouillage (16) sont composées du premier élément d'engagement (20), du deuxième élément d'engagement (22), du premier élément de verrouillage (24), du deuxième élément de verrouillage (26), de l'élément de raccordement (28) et de l'élément de contrôle (30).

6. Le dispositif de fixation tel que revendiqué dans la revendication 1, comprend en outre une unité d'utilisation raccordée au corps (10), où l'unité d'utilisation inclut un élément d'utilisation (76), un premier élément de déblocage (78) raccordé à l'élément d'utilisation (76), un deuxième élément de déblocage (80) et un lien (82), le lien (82) est raccordé de façon pivotante au corps (10) en son milieu et deux extrémités du lien (82) sont raccordées aux premier et deuxième éléments de déblocage (78, 80), le premier élément de déblocage (78) entraîne le premier élément d'engagement (20) et le deuxième élément de déblocage (80) entraîne le deuxième élément d'engagement (22), l'élément d'utilisation (76) est raccordé de façon pivotante au corps (10) et a un bras (84) qui est raccordé à une extrémité du premier élément de déblocage (78) où le lien (82) est raccordé à l'extrémité.

7. Le dispositif de fixation tel que revendiqué dans la revendication 6, où l'élément d'utilisation (76) a un pivot (86) auquel le corps (10) est raccordé de façon pivotante et le bras (84) a un trou de raccordement (88), le premier élément de déblocage (78) a une saillie (90) qui s'étend au travers du trou de raccordement (88).
